# EUROPÄISCHE PATENTSCHRIFT

(11) **EP 0 451 822 B1**
(45) Veröffentlichungstag und Bekanntmachung des Hinweises auf die Patenterteilung: **14.02.1996**
(21) Anmeldenummer: 91105701.6
(22) Anmeldetag: 10.04.1991
(51) Int. Cl.: C09K 19/54, C09K 19/56, G02F 1/137, C09K 19/58

(54) **Verwendung von makrocyclischen Verbindungen als Komponente für ferroelektrische Flüssigkristallmischungen**
Use of macrocyclic compounds as components for ferroelectric liquid crystal mixtures
Utilisation de composés macrocycliques comme composants de mélanges liquides cristallins ferroélectriques

(30) Priorität: 12.04.1990 DE 4011804
(43) Veröffentlichungstag der Anmeldung: 16.10.1991
(73) Patentinhaber: HOECHST AKTIENGESELLSCHAFT, D-65926 Frankfurt am Main (DE)
(72) Erfinder: Harada, Takamasa, Inbagun, Chiba (JP); Rösch, Norbert, Dr., W-6000 Frankfurt am Main (DE); Wegener, Peter, Dr., W-6240 Königstein/Taunus (DE)

(56) Entgegenhaltungen:
- WO-A-90/15117
- WO-A-91/08272
- FR-A- 2 344 617

## Beschreibung

Die Erfindung betrifft den Einsatz von makrocyclischen Verbindungen in ferroelektrischen Flüssigkristallmischungen und die Anwendung dieser Mischungen in elektrooptischen Schalt- und Anzeigeelementen.

Elektrooptische Schalt- und Anzeigeelemente mit einem Gehalt an ferroelektrischen Flüssigkristallmischungen ("FLC-Lichtventile") sind beispielsweise aus der EP-B 0 032 362 (= US 4 367 924) bekannt.

Flüssigkristallichtventile sind Vorrichtungen, die z.B. aufgrund elektrischer Beschaltung ihre optischen Transmissionseigenschaften derart ändern, daß durchfallendes (und gegebenenfalls wieder reflektiertes) Licht intensitätsmoduliert wird.

Beispiele sind die bekannten Uhren- und Taschenrechneranzeigen oder Flüssigkristalldisplays im OA - (office automation) oder TV- (television) Bereich. Dazu zählen aber auch optische Verschlüsse, sogenannte "light shutter", wie sie z.B. in Kopiermaschinen, Druckern, Schweißbrillen, Polbrillen zur dreidimensionalen Betrachtung etc. eingesetzt werden. Auch sogenannte "spatial light modulators" zählen zum Anwendungsbereich flüssigkristalliner Lichtventile (siehe Liquid Crystal Device Handbook, Nikkan Kogyo Shimbun, Tokyo, 1989; ISBN 4-526-02590-9C 3054 und darin zitierte Arbeiten).

Die elektrooptischen Schalt- und Anzeigeelemente sind so aufgebaut, daß eine FLC-Schicht beiderseitig von Schichten eingeschlossen ist, die üblicherweise, in dieser Reihenfolge ausgehend von der FLC-Schicht, mindestens eine elektrisch isolierende Schicht, Elektroden und eine Begrenzungsscheibe (z.B. aus Glas) sind. Außerdem enthalten sie einen Polarisator, sofern sie im "guest-host"- oder im reflexiven Modus betrieben werden, oder zwei Polarisatoren, wenn als Modus die transmissive Doppelbrechung ("birefringence mode") genutzt wird.

Orientierungsschichten bringen, gemeinsam mit einem hinreichend klein gewählten Abstand der Begrenzungsscheiben, die FLC-Moleküle der FLC-Mischung in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d.h. FLC-Displays sind bistabil schaltbar. Die Schaltzeiten sind umgekehrt proportional zur spontanen Polarisation der FLC-Mischung und liegen im Bereich von µs.

Als Hauptvorteil solcher FLC-Displays gegenüber den in der industriellen Praxis bisher im wesentlichen noch anzutreffenden LC-Displays wird das erreichbare Multiplex-Verhältnis angesehen, d.h. die maximale Zahl der im zeitlichsequentiellen Verfahren ("Multiplex-Verfahren") ansteuerbaren Zeilen, das bei FLC-Displays signifikant größer als bei herkömmlichen LC-Displays ist. Diese elektrische Ansteuerung basiert im wesentlichen auf der vorstehend genannten und in SID 85 DIGEST p. 131 (1985) beispielhaft beschriebenen Pulsadressierung.

Ein wesentlicher Nachteil von FLC-Displays ist jedoch, daß sie im nichtangesteuerten Zustand eine unerwünschte Nichtuniformität des Direktors (d.h. der Molekül-Vorzugsrichtung) und somit einen oder mehrere sogenannte Twist-Zustände aufweisen. (M.A. Handschy, N.A. Clark, S.T. Lagerwall; Phys. Rev. Lett. 51, 471 (1983) M. Glogarova, J. Pavel; J.Phys. (France) 45, 143 (1984) N. Higi, T. Ouchi, H. Takezoe, A. Fukuda; Jap. J. Appl. Phys. 27, 8 (1988))
Diese Nichtuniformität führt im Memory-Zustand und im Multiplexbetrieb zu einer starken Kontrastverminderung im Display, insbesondere dadurch, daß der lichtsperrende Zustand eine beträchtliche Aufhellung erfährt (grauer Dunkelzustand). Außerdem ist mit dem Auftreten des Twist-Zustandes eine Wellenlängendispersion verknüpft, die zu verfälschten Farben im Display führen kann.

Es wurde bereits versucht, durch geeignete Wahl von Orientierungsschichten das Auftreten der störenden Twist-Zustände zu unterdrücken, wobei aber bislang nur mäßige Erfolge zu verzeichnen waren. Sehr oft erwiesen sich die manchmal auftretenden nahezu uniformen Zustände (z.B. bei Verwendung von schrägbedampften SiO) als instabil und zerfielen wieder in Twist-Zustände.

Das Auftreten von Twist-Zuständen scheint insbesondere bei der Verwendung von ferroelektrischen Flüssigkristallmischungen mit hoher spontaner Polarisation begünstigt zu sein (M. A. Handschy and N. A. Clark; Ferroelectrics 59, 69 (1984). Solche Mischungen sind jedoch insbesondere für die Entwicklung hochinformativer Displays geeignet, weil sie zu kurzen Schaltzeiten führen.

Aufgabe der vorliegenden Erfindung ist es, FLC-Mischungen bereitzustellen, die in FLC-Displays keine Twistzustände, sondern uniforme Zustände ausbilden und somit zu einem hohen Kontrast führen.

Überraschenderweise wurde nun gefunden, daß durch Zugabe von makrocyclischen Verbindungen zu FLC-Mischungen das Auftreten der oben beschriebenen Twist-Zustände unterdrückt werden kann.

In DE-A 39 39 697 wurde bereits der Einsatz von Kryptanden und Coronanden - die auch Makrocyclen darstellen können - in Flüssigkristallmischungen zur Unterdrückung von sogenannten Geisterbildern vorgestellt. Die nunmehr eingesetzten makrocyclischen Verbindungen - bei denen nicht die Fähigkeit zur Ionenkomplexierung im Vordergrund steht - unterdrücken das Auftreten von Twist-Zuständen unabhängig von der jeweils verwendeten Orientierungsschicht.

Die Lösung der Aufgabe liegt somit in der Bereitstellung einer ferroelektrischen Flüssigkristallmischung bestehend aus mindestens zwei Komponenten, wobei die eine Komponente mindestens eine makrocyclische Verbindung der allgemeinen Formel (1) darstellt 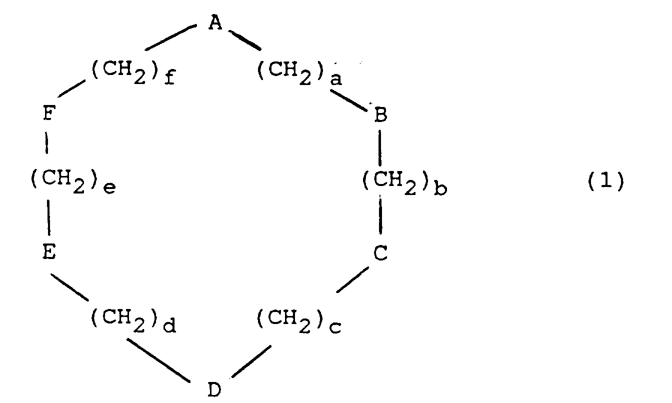 wobei
- a, b, c, d, e, f: unabhängig voneinander eine ganze Zahl von Null bis 4, wobei a + b + c + d + e + f ≥ 7 ist, und
- -A-, -B-, -C-, -D-, -E-, -F-: gleich oder verschieden -CH₂-, -CHR'-, -CH=CH-, -CR=CR'-, -C≡C-, 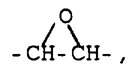 -CO-, -COO-, 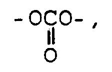 -CONH-, -CONR'-, -NR'-, 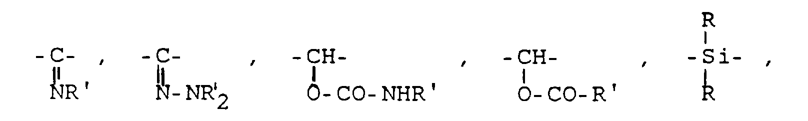 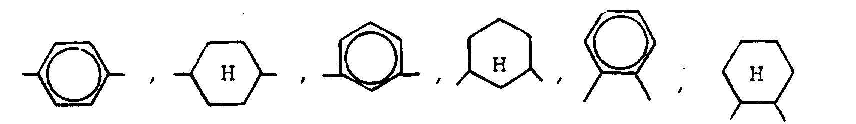 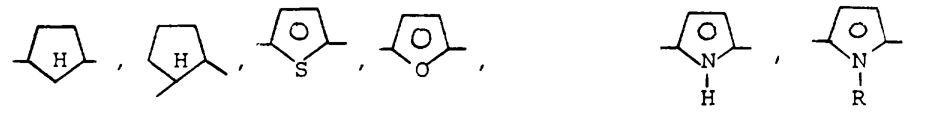 oder 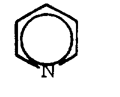 bedeuten,

- wobei R: gleich Alkyl mit 1 bis 12 C-Atomen und
- R': gleich Alkyl mit 1 bis 12 C-Atomen, wobei eine -CH₂-Gruppe durch -O-, -COO- oder -OCO-ersetzt sein kann, Phenyl oder Cl, F oder CN bedeuten können.

Bevorzugt wird eine ferroelektrische Flüssigkristallmischung die eine makrocyclische Verbindung der Formel (I) enthält, wobei die Symbole folgende Bedeutung haben:
a, b, c, d, e, f, R, R' wie oben beschrieben
-B-, -C-, - E-, -F- eine -CH₂-Gruppe
   und
-A-, -D- gleich oder verschieden
-CH₂- , -CHR'-, -CH=CH-, -CR=CR'-, 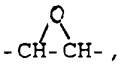 -CO-, -COO-, 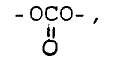 -CONH-, -CONR'-, -NR'-,

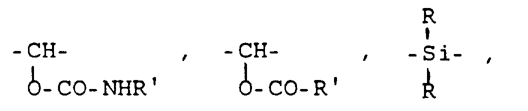

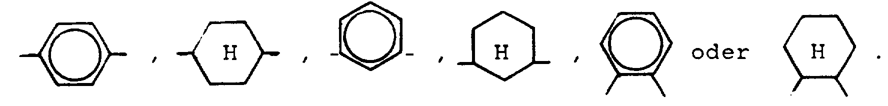

Besonders bevorzugt werden makrocyclische Verbindungen gemäß Formel (1) eingesetzt, bei denen die Symbole folgende Bedeutung haben:
a, b, c, d, e, f unabhängig voneinander eine ganze Zahl von Null bis 3,
-B-, -C-, -E-, -F- eine -CH₂-Gruppe
-A-, -D- gleich oder verschieden
-CH₂- , -CHR'-, -CH=CH-, 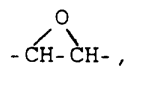 -CO-, -COO-, 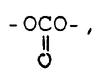 -CONH- , -CONR'-, 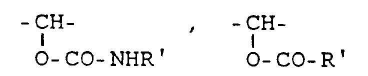 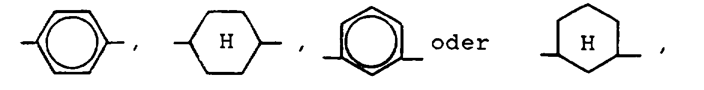
   - wobei R: gleich Alkyl mit 1 bis 12 C-Atomen und
   - R': gleich Alkyl mit 1 bis 12 C-Atomen oder Phenyl bedeuten.

Besonders bevorzugt haben die Gruppen -A-, -D- folgende Bedeutung
-CH₂-, -CHR'-, -CH=CH-, 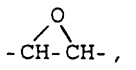 -CO-, -COO-,

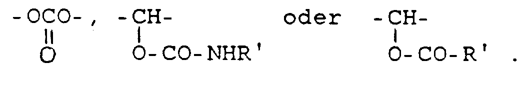

Im allgemeinen enthält die erfindungsgemäße Mischung 0,01 bis 10 Mol-%, insbesondere 0,1 bis 10 Mol-%, der makrocyclischen Verbindung.

Prinzipiell ist ein weites Spektrum von makrocyclischen Verbindungen - d. h. ringförmige Verbindungen mit 13 oder mehr Gliedern; zur Abgrenzung z. B. O. A. Neumüller (ed.), Römpps Chemie-Lexikon, 8. Auflage, Frankh'sche Verlagsbuchhandlung, Stuttgart 1989 - für die Verwendung in Flüssigkristallmischungen geeignet, jedoch sind zur Unterdrückung von Twist-Zuständen insbesondere Makrocyclen der eben beschriebenen Formel (1) geeignet. Die erfindungsgemäßen Mischungen können auch mehrere unterschiedliche Verbindungen der Formel (I) enthalten. In der FLC-Mischung sind hierbei insgesamt 0,01 bis 10 Mol-% an makrocyclischen Verbindungen enthalten.

Die Flüssigkristall-Mischungen bestehen in der Regel aus 2 bis 20, vorzugsweise 2 bis 15 Komponenten, darunter mindestens einer makrocyclischen Verbindung. Die anderen Bestandteile werden vorzugsweise ausgewählt aus den bekannten Verbindungen mit nematischen, cholesterischen und/oder geneigt/smektischen Phasen, dazu gehören beispielsweise Schiffsche Basen, Biphenyle, Terphenyle, Phenylcyclohexane, Cyclohexylbiphenyle, Pyrimidine, Zimtsäureester, Cholesterinester, verschieden überbrückte, terminal-polare mehrkernige Ester von p-Alkylbenzoesäuen. Im allgemeinen liegen die im Handel erhältlichen Flüssigkristall-Mischungen bereits vor der Zugabe der erfindungsgemäßen Verbindung(en) als Gemische verschiedenster Komponenten vor, von denen mindestens eine mesogen ist, d. h. als Verbindung, in derivatisierter Form oder im Gemisch mit bestimmten Cokomponenten eine Flüssigkristall-Phase zeigt [= mindestens eine enantiotrope (Klärtemperatur > Schmelztemperatur) oder monotrope (Klärtemperatur < Schmelztemperatur) Mesophasenbildung erwarten läßt].

Die beschriebenen Flüssigkristallmischungen lassen sich vorteilhaft in elektrooptischen Schalt- und Anzeigevorrichtungen einsetzen.

Die erfindungsgemäßen Schalt- und Anzeigevorrichtungen (FLC-Lichtventile bzw. Displays) weisen u.a. folgende Bestandteile auf: eine erfindungsgemäße flüssigkristalline Mischung (enthaltend eine makrocyclische Verbindung), Trägerplatten (z.B. aus Glas oder Kunststoff), beschichtet mit transparenten Elektroden (zwei Elektroden), mindestens eine Orientierungsschicht, Abstandshalter, Kleberahmen, Polarisatoren sowie für Farbdisplays dünne Farbfilterschichten. Weitere mögliche Komponenten sind Antireflex-, Passivierungs-, Ausgleichs- und Sperrschichten sowie elektrisch nichtlineare Elemente, wie z.B. Dünnschichttransistoren (TFT) und Metall-Isolator- Metall-(MIM)-Elemente. Im Detail ist der allgemeine Aufbau von Flüssigkristalldisplays bereits in einschlägigen Monographien beschrieben (z.B. E. Kaneko, "Liquid Crystal TV Displays: Principles and Applications of Liquid Crystal Displays", KTK Scientific Publishers, 1987, Seiten 12-30 und 163-172).

Unter den FLC-Lichtventilen werden Schaltvorrichtungen, die im Multiplexverfahren angesteuert werden, bevorzugt. Besonders bevorzugt werden Flüssigkristallzellen, die in SSFLC-Technik ("surface stabilized ferroelectric liquid crystal") arbeiten und bei denen die Schichtdicke (d.h. Abstand der Begrenzungsscheiben) 1 bis 20 µm beträgt. Besonders bevorzugt ist eine Schichtdicke von 1 bis 10 µm, im Doppelbrechungsmodus insbesonders von 1,2 bis 3 µm.

Des weiteren lassen sich die erfindungsgemäßen Verbindungen vorteilhaft beim Betrieb eines SSFLC Displays im sog. "guest-host mode" einsetzen, bei dem der optische Effekt nicht auf Doppelbrechungsphänomene zurückgeht, sondern auf die anisotrope Absorption dichroitischer Farbstoffe, die in einer FLC-Matrix gelöst sind.

Die erfindungsgemäßen Verbindungen unterdrücken das Auftreten von Twist-Zuständen für verschiedene Geometrien der smektischen Lagen in der SSFLC-Zelle (siehe z.B. H.R. Dübal, C. Escher, D. Ohlendorf; Proc. 6th Intl. Symp. on Electrets, Oxford, England 1988). Insbesondere gilt dies für die sog. "jungfräuliche (virgin) Textur", bei der die smektischen Lagen gewinkelt verlaufen ("Chevron"-Geometrie) und für die "bookshelf" oder "quasi-bookshelf" Geometrie, bei denen die smektischen Lagen senkrecht zu den Glasplatten verlaufen (siehe Y. Sato et al., Jap. J. Appl. Phys. 28, 483 (1989)). Die Verwendung der erfindungsgemäßen Verbindungen in dieser "bookshelf" Geometrie ist besonders vorteilhaft, da dies nicht nur zu guten Dunkelzuständen, sondern wegen des großen effektiven Schaltwinkels auch zu einer hohen Transmission des Hellzustandes führt.

Außerdem hat sich gezeigt, daß die erfindungsgemäßen Verbindungen in FLC-Mischungen die feldinduzierte Herstellung einer homogenen quasi-bookshelf Geometrie (Y. Sato et al., Jap. J. Appl. Phys. 28, 483 (1989)) erleichtern.

Die Erfindung wird durch die nachfolgenden Beispiele erläutert:

### Beispiele

Makrocyclische Verbindungen, insbesondere solche der allgemeinen Formel (1), lassen sich allgemein auf folgenden Wegen darstellen:
1) durch Ringschluß nach dem Ziegler-Verdünnungsprinzip (Ziegler, Houben-Weyl 4/2, S.738-740, 755-764), z.B. aus α,ω-Diestern mit Alkalimetall zu Acyloinen (Finley, Chem. Rev. 64, 573-589 (1964)), oder durch Dieckmannsche Esterkondensation aus langkettigen α,ω-Diestern oder α,ω-Dinitrilen (Bloomfield, Tetr. Lett. 591 (1968)),
2) durch Ringerweiterungsreaktionen ausgehend von gut zugänglichen C₁₂- oder C₁₆-carbocyclischen Ketonen und/oder Olefinen, z.B. nach der Methode von E. Müller mit Diazomethan (Müller, Heischbiel, Tetr. Lett. 2809 (1964)) oder Diazoessigester (Mock, Hartmann, J. Org. Chem. 42, 459, 466 (1977)) unter Säure-Katalyse, nach Bayer-Villiger mit Persäuren zu Lactonen (Krow, Tetrahedron 37, 2697 (1981)), zu Carbonaten (Bailey, Slink, J. Am. Chem. Soc. 104, 1769 (1982)) oder Epoxiden nach Schmidt oder mit Stickstoffwasserstoffsäure zu Lactonen (Krow, Tetrahedron 37, 1283 (1981)).

### Beispiel 1

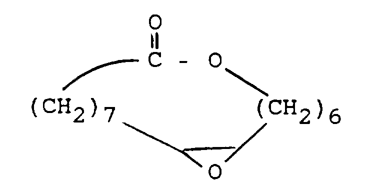

2,0 g 8-Cyclohexadecen-1-on (cis-trans-Gemisch) werden in 50 ml Dichlormethan mit 6,0 g 70%iger m-Cl-Perbenzoesäure 16 Stunden lang unter Rückfluß erwärmt. Nach Abkühlen wird von ausgefallener m-Cl-Benzoesäure abfiltriert, das Filtrat mit 2n-Sodalösung und Wasser gewaschen, getrocknet und eingeengt; Ausbeute: 1,95 g. Nach Reinigung durch Chromatographie (SiO₂; Hexan/Ethylacetat 95:5) erhält man 1,1 g einer zähen, klaren Flüssigkeit, die beim Stehen kristallisiert. NMR- und massenspektroskopische Daten bestätigen die obengenannte Struktur.

### Beispiel 2

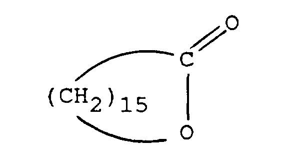

Ausgehend von 2,0 g Cyclohexadecanon und 4 g Perbenzoesäure wird analog das gesättigte Lacton (2-Oxa-cycloheptadecan-1-on) als wachsartige, hellkristalline Masse erhalten.

### Beispiel 3

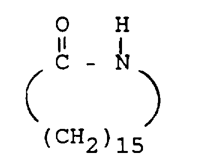

Zu 1 g Cyclohexadecanon, gelöst in 10 ml Chloroform, wird bei 20°C 1 ml konz. Schwefelsäure gegeben und unter Rühren portionsweise 0,5 g Natriumazid eingetragen. Anschließend wird 1 Stunde unter Rückfluß erhitzt und dann auf Eis gegeben; die CHCl₃-Phase wird abgetrennt und getrocknet und eingeengt. Auswaage 1,0 g. Nach Chromatographie (SiO₂/Ethylacetat) werden 0,4 g Kristalle erhalten, Schmp. 120-121°C, die nach IR, NMR und Massen-Spektrum der obigen Struktur eines 17-Ring-Lactams entsprechen.

### Beispiel 4

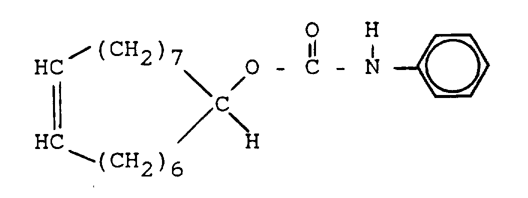

2,0 g 8-Cyclohexadecen-1-ol, hergestellt aus dem entsprechendem Keton durch Reduktion mit NaBH₄ in Ethanol, werden in 20 ml Dichlormethan mit 1 g Phenylisocyanat 3 Stunden zum Rückfluß erhitzt. Nach Einengen der Lösung wird chromatographisch gereinigt (SiO₂/ Hexan:Ethylacetat 95:5). Man erhält 800 mg Kristalle; Schmp. 86-87°C. Die analytischen Daten bestätigen die angegebene Struktur.

### Beispiel 5

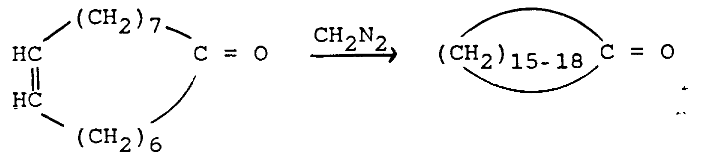

20 g 8-Cyclohexadecen-1-on in 50 ml Ether gelöst werden mit 1 ml BF₃·Etherat versetzt. Unter Eiskühlung und Rühren werden 325 ml Ether, die 145 mmol Diazomethan gelöst enthalten, zugetropft, so daß eine rasche Entfärbung eintritt. Nach Zugabe der Hälfte wird nochmals 1 ml BF₃-Etherat zugegeben. Nach vollendeter Zugabe wird mit Na₂CO₃-Lösung und Wasser gewaschen, getrocknet und eingeengt. Man erhält 24 g Rohprodukt, das nach GC-Analyse ein Gemisch von Cyclohexa-, Cyclohepta-, Cycloocta- und Cyclononadecanon enthält. Eine Trennung durch Destillation an der Drehbandkolonne ist möglich, die Substanzen unterscheiden sich durch Siedepunktdifferenzen von ca. 10°; Sdp. 145°/0,1 mm für das C₁₈-Keton. Die Feinreinigung erfolgt über präparative GC.

### Beispiel 6

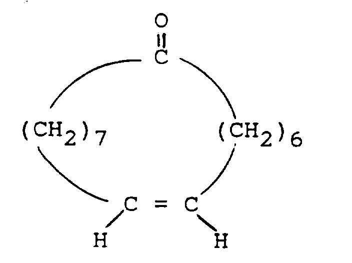

Die genannte Verbindung läßt sich nach literaturbekannten Methoden synthetisieren (siehe z.B. B.D. Mookherjee, R.W. Trenkle, R.R. Patel, J. Org. Chem. 36, 3266 (1971).

### Beispiel 7

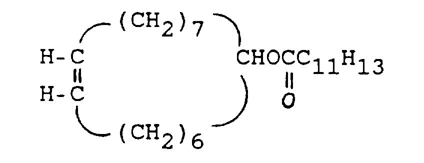

Eine Lösung von 2 g 8-Cyclohexadecen-1-on in 10 ml Ethanol wird mit 0,5 g Natriumborhydrid versetzt. Nach dreistündigem Rühren bei 60°C wird mit 2 n HCl auf pH 3 gestellt und im Vakuum zur Trockne gebracht. Der Rückstand wird in Dichlormethan aufgenommen und der Extrakt neutral gewaschen. Nach Abdampfen des Lösungsmittels wird aus Hexan umkristallisiert; 1,8 g 8-Cyclohexadecen-1-on als farblose Kristalle mit Schmp. 57-58°C.

Zu einer Lösung von 1,65 g 8-Cyclohexadecen-1-ol in 25 ml Diethylether werden 1,8 g Dodecanoylchlorid und 2,0 ml Triethylamin gegeben. Nach 5-stündigem Erhitzen zum Rückfluß wird in 100 ml H₂O gegeben, die organische Phase abgetrennt, die wäßrige Phase mit 25 ml Diethylether extrahiert und die vereinigten organischen Phasen im Vakuum eingedampft. Nach Reinigung des Rückstandes durch Chromatographie an Kieselgel mit Dichlormethanflexan 1:3 werden 1,05 g 8-Cyclohexadecen-1-yl-dodecanoat als viskoses Öl erhalten.

### Beispiel 8

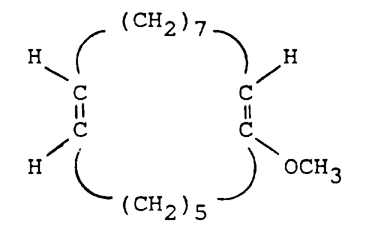

Eine Lösung von 10 g 8-Cyclohexadecen-1-on in 25 ml Orthoameisensäuremethylester wird mit 0,1 ml HCl (konz.) versetzt. Nach 12 h wird mit 0,1 g Benzolsulfonsäure versetzt und unter langsamer Steigerung der Temperatur erst Methylformiat, dann überschüssiger Orthoester abdestilliert. Durch Zugabe von 0,4 ml Natriummethylatlösung (30 % in Methanol) wird die Mischung auf pH 10 gestellt und das Produkt bei 100 bis 110°C/0,1 mbar abdestilliert; 8,1 g als Gemisch von 1-Methoxy-cyclohexa-1,7-dien und 1-Methoxy-cyclohexa-1,8-dien, jedes davon als cis/trans-Gemisch.

### Beispiel 9

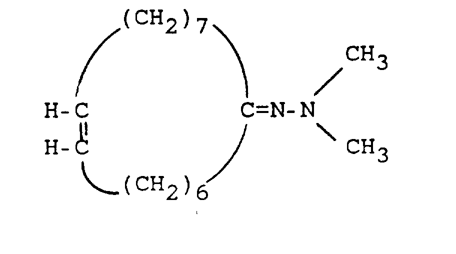

Eine Lösung von 1 ml (3,8 mmol) 8-Cyclohexadecen-1-on in 10 ml THF wird mit 0,5 ml N',N'-Dimethylhydrazin versetzt. Nach Zugabe von Molekularsieb (3 Å, aktiviert) wird 70 h bei 65°C gerührt. Nach Abtrennen des Molekularsiebs wird bei 1 mbar von Leichtsiedern befreit. Der Rückstand (0,72 g) besteht aus dem Produkt in einer Reinheit von 95 % (GC). Das IR-Spektrum weist nicht mehr die Carbonylbande (1710cm⁻¹) des Ausgangsmaterials, sondern die C=N-Bande (1650⁻¹) eines Hydrazons auf; im ¹H-NMR erscheint bei 2,4 ppm ein Singulett für die Methylgruppen.

### Beispiel 10

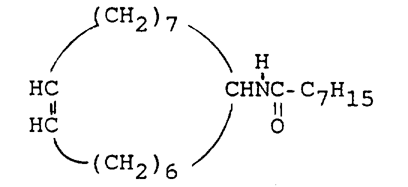

1,0 g 8-Cyclohexadecen-1-amin, hergestellt (analog Synthesis 1975, 135) durch reduktive Aminierung aus 8-Cyclohexadecen-1-on, wird in 10 ml THF mit 1 ml Triethylamin und 0,72 ml Octansäurechlorid versetzt. Nach 3 h wird vom gebildeten Niederschlag abfiltriert und das Filtrat im Vakuum zur Trockne gebracht. Nach zweimaliger Umkristallistion aus Ethylacetat werden 1,1 g farblose Kristalle vom Schmp. 87-90°C eihalten.

### Beispiel 11

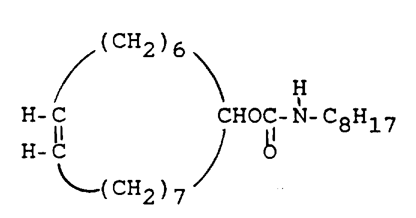

Eine Lösung von 0,85 g 8-Cyclohexadecen-1-ol (Herstellung s. Beispiel 7) in 10 ml THF wird mit 0,55 g Oxtylisocyanat und 0,05 ml Triethylamin versetzt. Nach 100 h bei 60°C wird im Vakuum zur Trockne gebracht. Durch Chromatographie (SiO₂/CH₂Cl₂) werden 0,75 g farblose Kristalle vom Schmp. 43°C erhalten.

### Beispiel 12

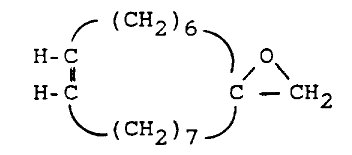

Zu 30 ml Dimethylsulfoxid werden 0,7 g Natriumhydrid (80 %) gegeben sowie nach beendeter Reaktion 4,5 g Trimethylsulfoxoniumiodid. Nach 30 Minuten bei 50°C werden 5 ml 8-Cyclohexadecen-1-on zugegeben und 2 h bei 50°C gehalten. Nach üblicher hydrolytischer Aufarbeitung wird durch Chromatographie (SiO₂; Hexan/Ethylacetat 95/5) gereinigt. Man erhält als erste Fraktion 1,6 g eines viskosen Öls.

### Beispiel 13

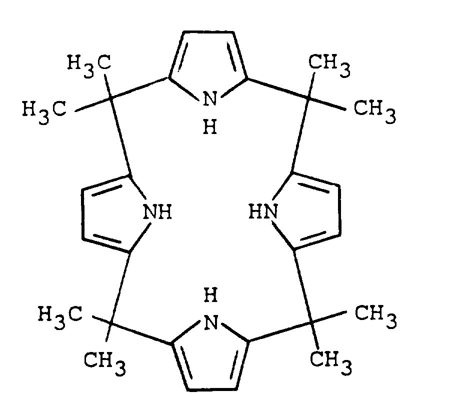

wurde hergestellt nach P. Rothemund, C.L. Gage, J. Am. Chem. Soc. 77, 3340 (1955); Schmp. 294°C.

### Beispiel 14

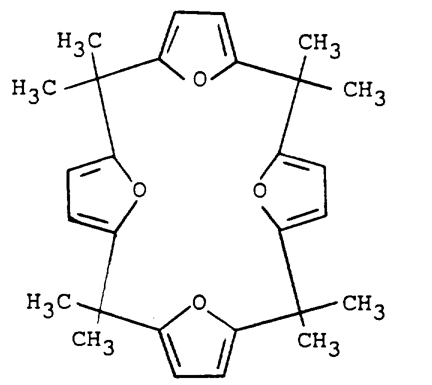

wurde hergestellt nach M. De Sousa-Hecely, A.J. Rest, J. Chem. Soc. Chem. Comm. 1981, 149; Schmp. 241°C.

### Beispiel 15

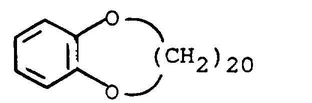

wurde hergestellt nach L. Mandolini, B. Masci, J. Org. Chem. 42, 2840 (1977); Schmp. 56°C.

### Anwendungsbeispiele

Es wird eine LC-Grundmischung aus folgenden acht Komponenten (in Mol-%) hergestellt 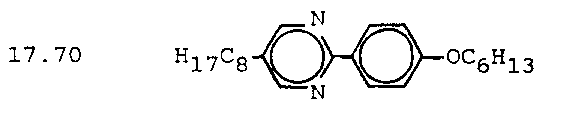 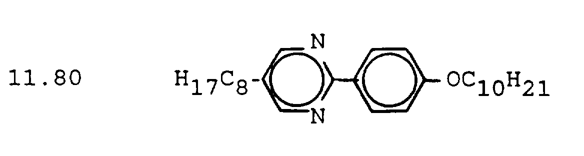 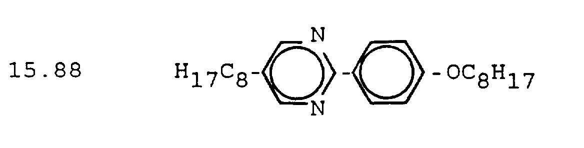 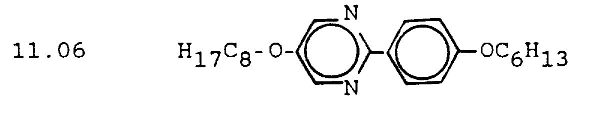 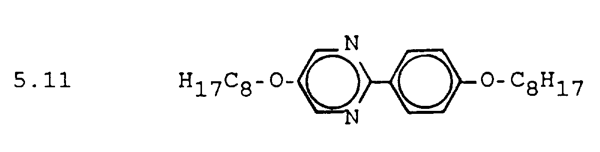 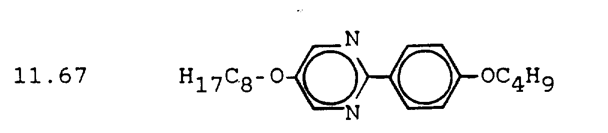 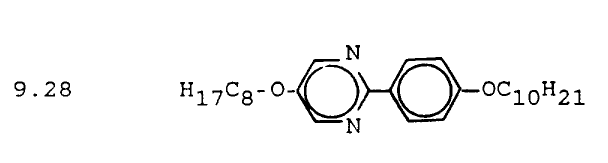 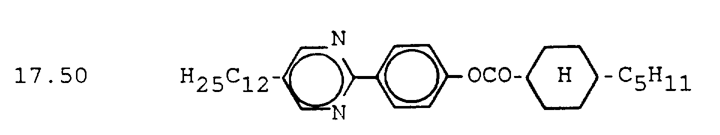 Die Mischung weist folgende Phasenfolge auf:
S_{c} 69 S_{A}76 N 92 I

Als Beispiele für Dotierstoffe werden folgende Verbindungen eingesetzt: Dotierstoff D1 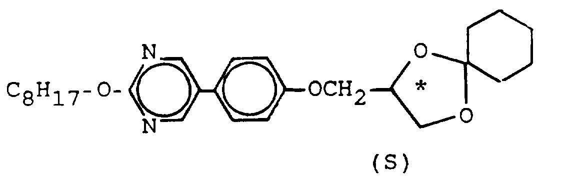 Dotierstoff D2 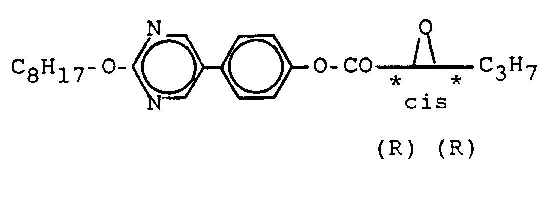 Dotierstoff D3 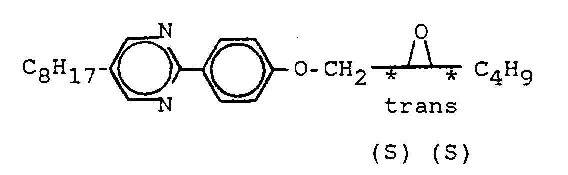 Aus der genannten LC-Mischung, den Dotierstoffen und den in den Beispielen genannten makrocyclischen Verbindungen werden unter Berücksichtigung der vorstehenden Daten die nachfolgenden Anwendungsbeispiele (FLC-Mischungen) erstellt. Als Maß für die Unterdrückung von Twist-Zuständen wird der Schaltwinkel, die Transmissionseigenschaften und der Kontrast bei Meßzellen (Hersteller E.H.C. Inc., Tokyo), die mit den genannten Mischungen gefüllt sind, bestimmt.

### Anwendungsbeispiel A1

Die FLC-Vergleichsmischung hat folgende Zusammensetzung (in Mol-%):

| | |
|---|---|
| LC-Grundmischung | 78,3% |
| Dotierstoff D1 | 4,7 % |
| Dotierstoff D2 | 9,0 % |
| Dotierstoff D3 | 8,0 % |

und die Phasenfolge S_{c}*605_{A}*70N*79I mit einer spontanen Polarisation von 55 nC cm⁻.

Der Schaltwinkel (2 θ_{eff}), wird für diese Vergleichsmischung und für eine FLC-Mischung, die darüber hinaus eine makrocyclische Verbindung aus Beispiel 6 enthält, untersucht. Dazu wird eine Meßzelle mit der entsprechenden FLC-Mischung in einem Polarisationsmikroskop (mit Drehtisch) justiert. Bei Ansteuerung der Zelle kann der Schaltwinkel durch Drehen des Mikroskoptisches ermittelt werden. Nach Zugabe der entsprechenden makrocyclischen Verbindungen zeigt die FLC-Mischung deutlich verbesserte Eigenschaften, wie sich in den entsprechenden Meßergebnissen zeigt.

### Anwendungsbeispiele A2 bis A5

In analoger Weise wie in Al wird für FLC-Mischungen, die die makrocyclischen Verbindungen aus den Beispielen 1, 3, 4 und 5 enthalten, der jeweilige effektive Schaltwinkel (2 O_{eff}) bestimmt.

Die Ergebnisse (siehe Tab. 1) zeigen die deutliche Verbesserung des Schalt-Winkels (und damit des Kontrastes im Display) gegenüber dem Vergleichsbeispiel (ohne makrocyclische Verbindung).

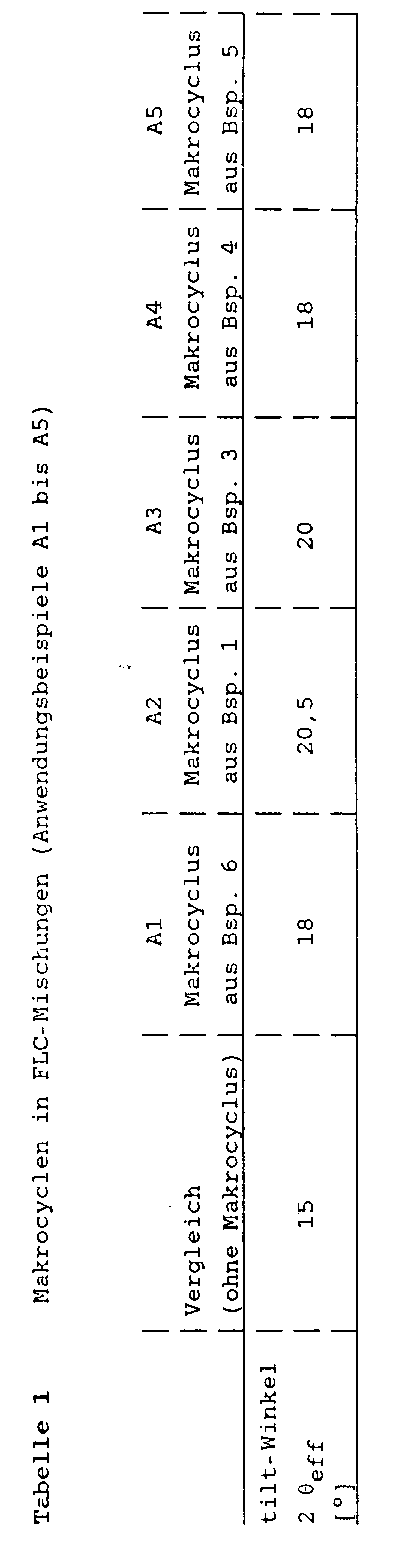

## Patentansprüche

1. Ferroelektrische Flüssigkristallmischung bestehend aus mindestens zwei Komponenten, dadurch gekennzeichnet, daß sie als eine Komponente mindestens eine makrocyclische Verbindung enthält, die ausgewählt wird aus einer Gruppe bestehend aus
a) einer Verbindung der allgemeinen Formel (1) 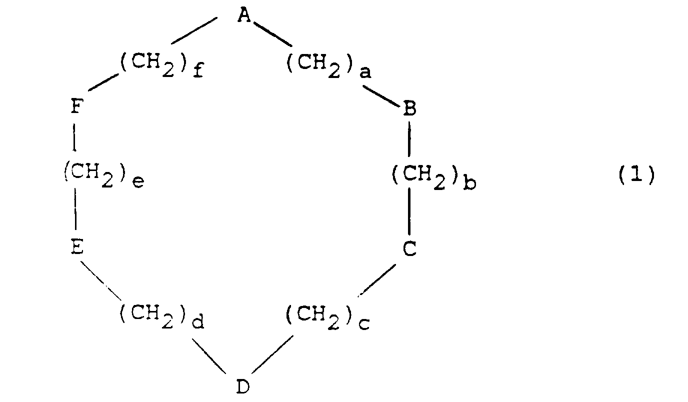 in der
a, b, c, d, e, f unabhängig voneinander eine ganze Zahl von Null bis 4 ist, wobei a + b + c + d + e + f ≥ 7 ist, und
-A-, -B-, -C-, -D-, -E-, -F- gleich oder verschieden
-CH₂- , -CHR'-, -CH=CH-, -CR=CR'-, - C≡C-, 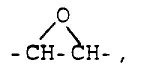
-CO- , -COO-, 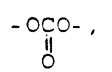 -CONH-, -CONR'-, -NR'-, 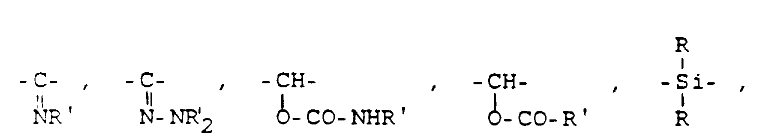 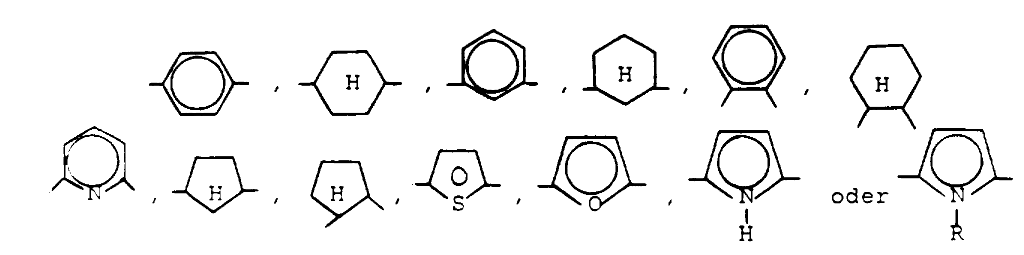
worin R gleich Alkyl mit 1 bis 12 C-Atomen und
R' gleich Alkyl mit 1 bis 12 C-Atomen, wobei eine -CH₂-Gruppe durch -O-, -COO- oder -OCO- ersetzt sein kann, Phenyl oder Cl, F oder CN bedeuten kann.
b) cis/trans 1-Methoxy-cyclohexadeca-1,7-dien
c) cis/trans 1-Methoxy-cyclohexadeca-1,8-dien
d) 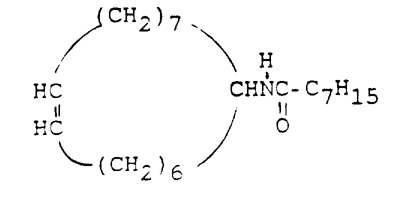
e) 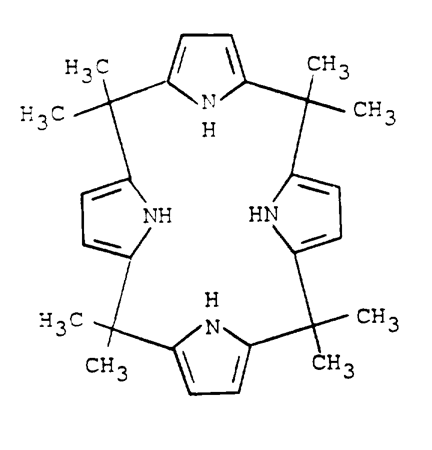
f) 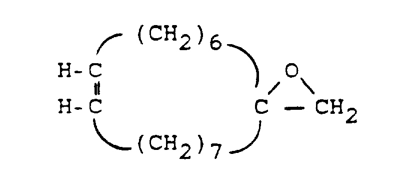
g) 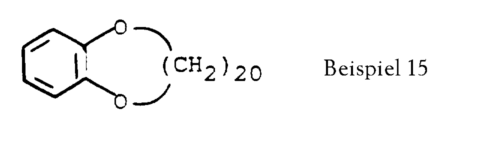
h)

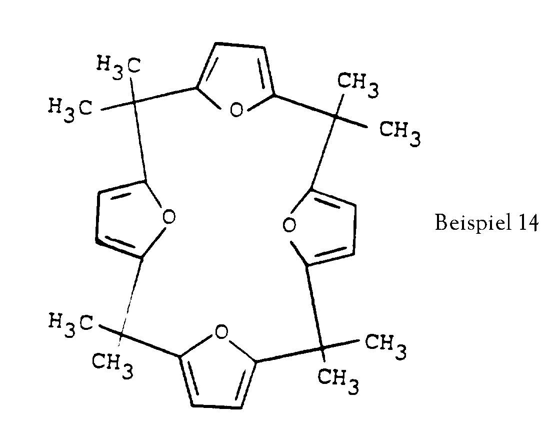

2. Flüssigkristallmischung gemäß Anspruch 1, dadurch gekennzeichnet, daß in Formel (1) die Symbole folgende Bedeutung haben:
a, b, c, d, e, f, R, R' wie in Anspruch 1,
-B-, -C-, -E-, -F- -CH₂- und
-A-, -D- gleich oder verschieden
-CH₂-, -CHR'-, -CH=CH-, -CR=CR'-, 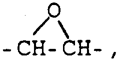
-CO-, -COO-, 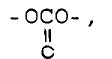 -CONH-, -CONR'-, -NR'-,

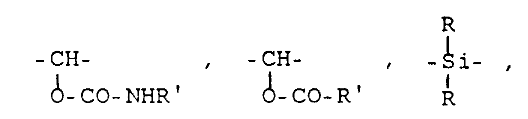

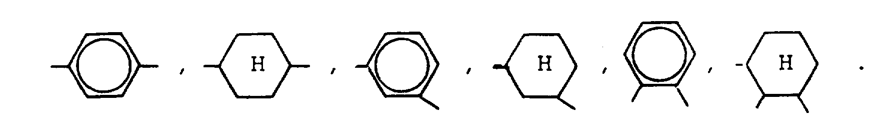

3. Flüssigkristallmischung gemäß Anspruch 1, dadurch gekennzeichnet, daß in Formel (1) die Symbole folgende Bedeutung haben:
a, b, c, d, e, f unabhängig voneinander eine ganze Zahl von Null bis 3
-B-, -C-, -E-, -F- -CH₂-
-A-, -D- gleich oder verschieden
-CH₂-, -CHR'-, -CH=CH-, 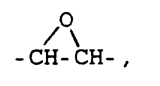 -CO-, -COO-, 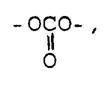 -CONH-, -CONR'-, 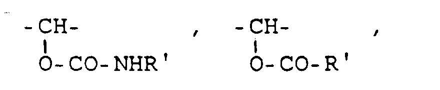 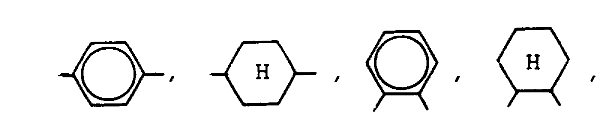
wobei R gleich Alkyl mit 1 bis 12 C-Atomen und
R' gleich Alkyl mit 1 bis 12 C-Atomen oder Phenyl.

4. Flüssigkristallmischung gemäß Anspruch 3, dadurch gekennzeichnet, daß in Formel (1) die Symbole A + O folgende Bedeutung haben: -A-, -D- gleich oder verschieden -CH₂-, -CHR'-, -CH=CH-, 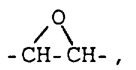 -CO-, -COO-,

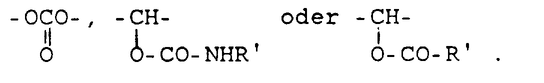

5. Flüssigkristallmischung gemäß einem der Ansprüche 1 bis 4, dadurch gekennzeichnet, daß sie 0,01 bis 10 Mol-% der makrocyclischen Verbindung der allgemeinen Formel (I) enthält.

6. Verwendung von makrocyclischen Verbindungen gemäß einem der Ansprüche 1 bis 5 in ferroelektrischen Flüssigkristallmischungen.

7. Elektrooptische Schalt- und Anzeigevorrichtung enthaltend eine ferroelektrische Flüssigkristallmischung, zwei Elektroden, zwei Trägerplatten sowie mindestens eine Orientierungsschicht, dadurch gekennzeichnet, daß sie eine ferroelektrische Flüssigkristallmischung enthält, die als eine Komponente eine makrocyclische Verbindung enthält.

8. Elektrooptische Schalt- und Anzeigevorrichtung enthaltend eine ferroelektrische Flüssigkristallmischung, zwei Elektroden, zwei Trägerplatten sowie mindestens eine Orientierungsschicht, dadurch gekennzeichnet, daß sie eine FLC-Mischung enthält, die als eine Komponente 0,01 bis 10 Mol-% einer makrocyclischen Verbindung gemäß Anspruch 1 enthält.

## Claims

1. A ferroelectric liquid crystal mixture consisting of at least two components, which contains as one component at least one macrocyclic compound selected from the group consisting of
a) a compound of the general formula (1) 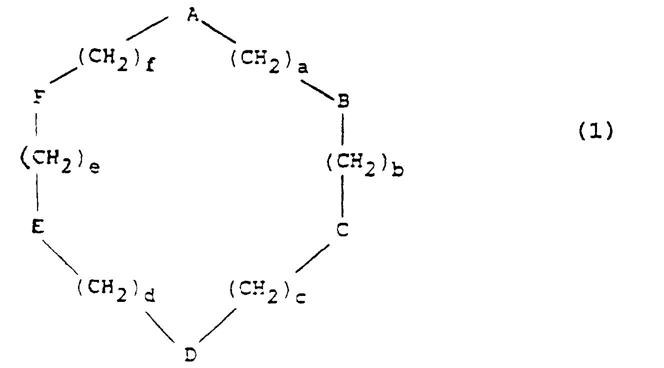 in which
a, b, c, d, e, f, independently of one another, are an integer from zero to 4, a + b + c + d + e + f being ≥ 7, and
-A-, -B-, -C-, -D-, -E-, -F-, identical or different, are
-CH₂- , -CHR'-, -CH=CH- , -CR=CR'-, -C≡C-, 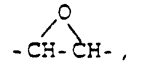 -CO-, -COO-, 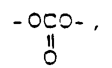 -CONH-, -CONR'-, -NR'-, 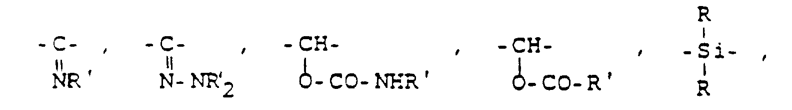 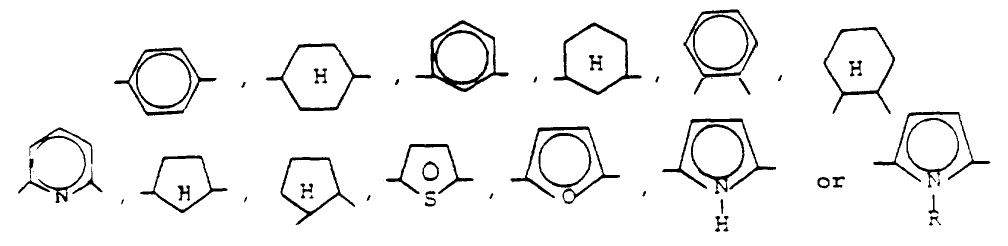
in which R can be alkyl of 1 to 12 carbon atoms, and
R' can be alkyl of 1 to 12 carbon atoms, in which a -CH₂- group can be replaced by -O-, -COO-, or -OCO-, phenyl or Cl, F or CN,
b) cis/trans 1-methoxycyclohexadeca-1,7-diene
c) cis/trans 1-methoxycyclohexadeca-1,8-diene
d) 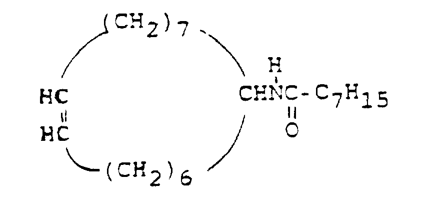
e) 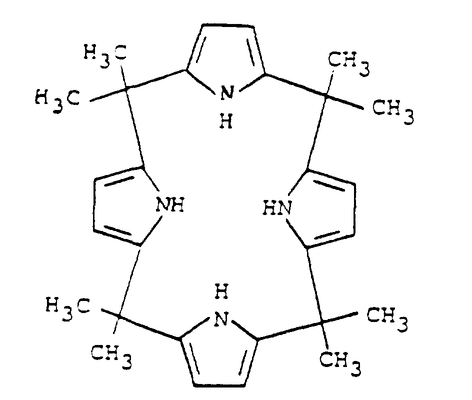
f) 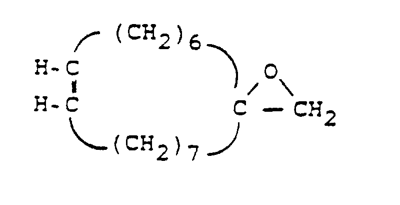
g) 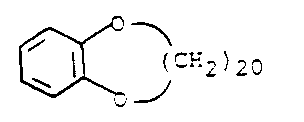
h)

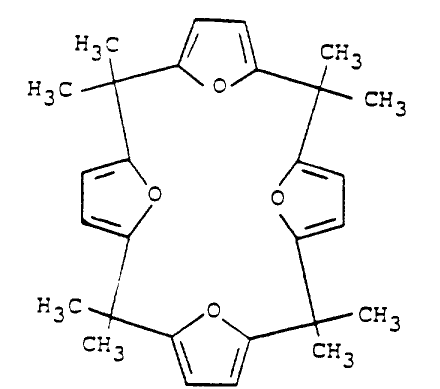

2. A liquid crystal mixture as claimed in claim 1, wherein the symbols in formula (1) have the following meaning:
a, b, c, d, e, f, R, R' are as in claim 1, -B-, -C-, -E-, -F- are -CH₂- and
-A-, -D-, identical or different, are
-CH₂- , -CHR'-, -CH=CH-, -CR=CR'-, 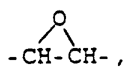
-CO-, -COO-, 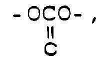 -CONH-, -CONR'-, -NR'-,

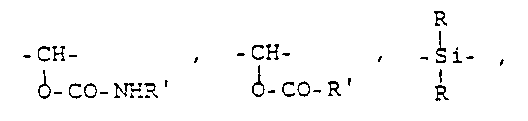

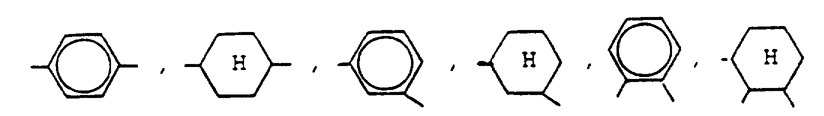

3. A liquid crystal mixture as claimed in claim 1, wherein the symbols in formula (1) have the following meaning:
a, b, c, d, e, f, independently of one another, are an integer from zero to 3,
-B-, -C-, -E-, -F- are -CH₂-
-A-, -D-, identical or different, are
-CH₂- , -CHR'-, -CH=CH-, 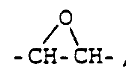
-CO-, -COO-, 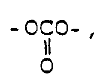 -CONH-, -CONR'-, 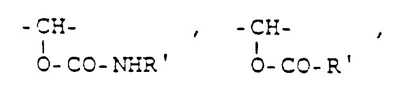 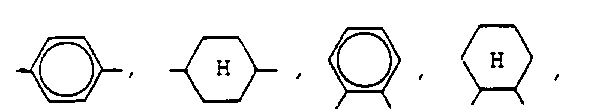
in which R is alkyl of 1 to 12 carbon atoms and
R' is alkyl of 1 to 12 carbon atoms or phenyl.

4. A liquid crystal mixture as claimed in claim 3, wherein the symbols A + O in formula (1) have the following meaning:
-A-, -D-, identical or different, are
-CH₂-, -CHR'-, -CH=CH-, 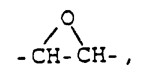
-CO-, -COO-,

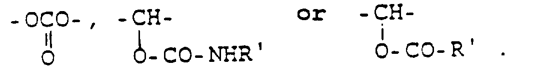

5. A liquid crystal mixture as claimed in one of claims 1 to 4, which contains 0.01 to 10 mol% of the macrocyclic compound of the general formula (1).

6. Use of a macrocyclic compound as claimed in one of claims 1 to 5 in ferroelectric liquid crystal mixtures.

7. An electrooptical switching and display device containing a ferroelectric liquid crystal mixture, two electrodes, two support plates and at least one orientation layer, which contains a ferroelectric liquid crystal mixture containing as one component a macrocyclic compound.

8. An electrooptical switching and display device containing a ferroelectric liquid crystal mixture, two electrodes, two support plates and at least one orientation layer, which contains an FLC mixture containing as one component 0.01 to 10 mol% of a macrocyclic compound as claimed in claim 1.

## Revendications

1. Mélange de cristaux liquides ferroélectriques composé d'au moins deux constituants, caractérisé en ce qu'il contient comme un constituant au moins un composé macrocyclique pris dans le groupe comportant
a) un composé de formule générale (1) 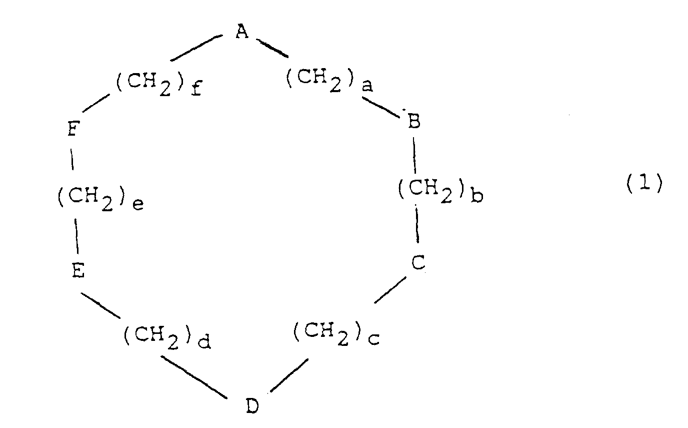 dans laquelle
a, b, c, d, e, f, indépendamment les uns des autres, sont un nombre entier de zéro allant jusqu'à 4, a + b + c + d + e + f ≥ 7, et
-A-, -B-, -C-, -D-, -E-, -F-, identiques ou différents,
représentent
-CH₂-, -CHR'- , -CH=CH- , -CR=CR'-, -C≡C-, 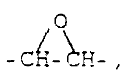 -CO-, -COO-, 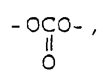 -CONH-, -CONR'-, -NR'-, 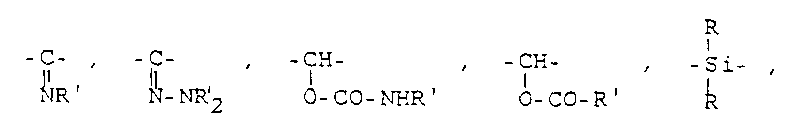 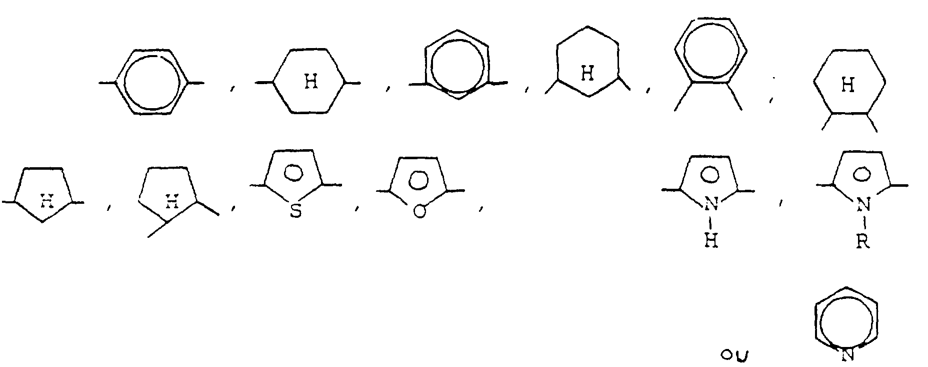 où
R représente alkyle avec 1 à 12 atomes de carbone et
R' représente alkyle avec 1 à 12 atomes de carbone, un groupe -CH2- pouvant être remplacé par -O-, -COO- ou -OCO-,
pouvant représente phényle ou Cl, F ou CN.
b) cis/trans 1-méthoxy-cyclohexadéca-1,7-diène
c) cis/trans 1-méthoxy-cyclohexadéca-1,8-diène
d) 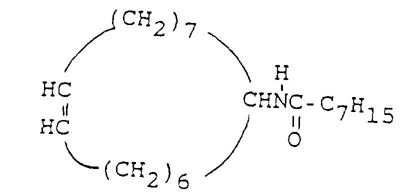
e) 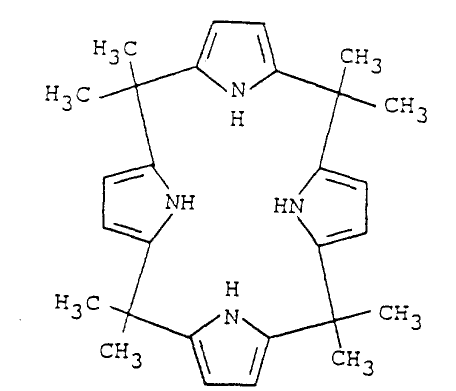
f) 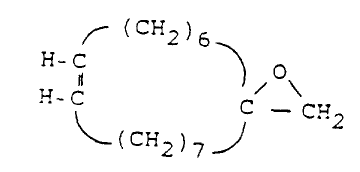
g) 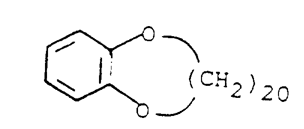
h)

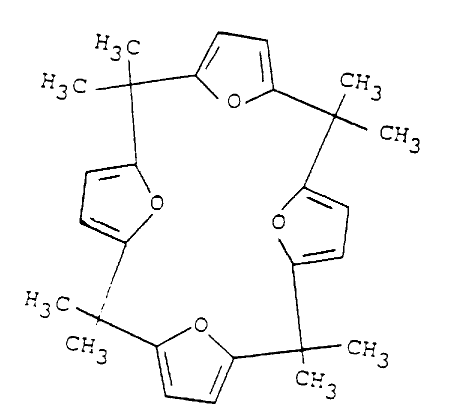

2. Mélange de cristaux liquides selon la revendication 1, caractérisé en ce que dans la formule (1) les symboles ont la signification suivante
a, b, c, d, e, f, R, R' comme données dans la revendication 1
-B-, -C-, -E-, -F- -CH₂- et
-A-, -D-, identiques ou différents
-CH₂-, -CHR'-, -CH=CH-, -CR=CR'-, 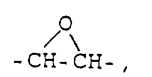 -CO-, -COO-, 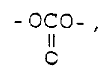 -CONH-, -CONR'-, -NR'-,

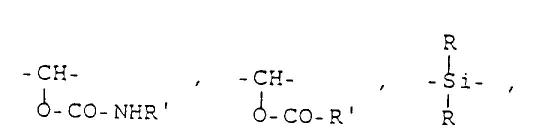

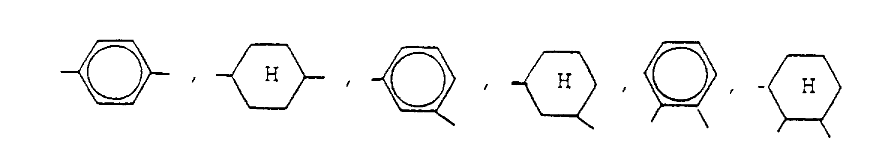

3. Mélange de cristaux liquides selon la revendication 1, caractérisé en ce que dans la formule (1), les symboles ont la signification suivante : a, b, c, d, e, f, indépendamment les uns des autres, représentent un nombre entier de zéro allant jusqu'à 3 -B-, -C-, -E-, -F- -CH₂- -A-, -D-, identiques ou différents, représentent -CH₂-, -CHR'-, -CH=CH-, 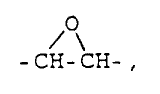 -CO-, -COO-, 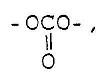 -CONH-, -CONR'-, 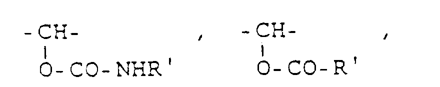 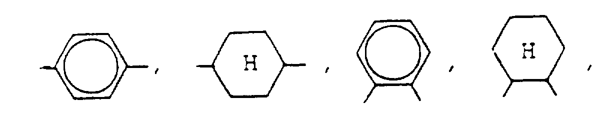
R représentant alkyle avec 1 à 12 atomes de carbone et
R' représentant alkyle avec 1 à 12 atomes de carbone ou phényle.

4. Mélange de cristaux liquides selon la revendication 3, caractérisé en ce que dans la formule (1) les symboles A + O ont la signification suivante :
-A-, -D-, identiques ou différents, représentent -CH₂-, -CHR'-, -CH=CH-, 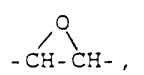 -CO-, -COO-,

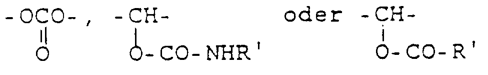

5. mélange de cristaux liquides selon l'une des revendications 1 à 4, caractérisé en ce qu'il contient de 0,01 à 10 mol-% du composé macrocyclique de formule générale (1).

6. Utilisation de composés macrocycliques selon l'une des revendications 1 à 5 dans des mélanges de cristaux liquides ferroélectriques.

7. Dispositif de commutation et d'affichage électrooptique contenant un mélange de cristaux liquides ferroélectrique, deux électrodes, deux plaques-support ainsi qu'au moins une couche d'orientation, caractérisé en ce qu'il contient un mélange de cristaux liquides ferroélectriques, qui contient comme un des constituants un composé macrocyclique.

8. Dispositif de commutation et d'affichage électrooptique contenant un mélange de cristaux liquides ferroélectriques, deux électrodes, deux plaques-support ainsi qu'au moins une couche d'orientation, caractérisé en ce qu'il contient un mélange de cristaux liquides ferroélectriques qui contient comme un des constituants de 0,01 à 10 mol-% d'un composé macrocyclique selon la revendication 1.
